# FASCICULE DE BREVET EUROPEEN

(11) **EP 2 028 452 B1**
(45) Date de publication et mention de la délivrance du brevet: **26.05.2010**
(21) Numéro de dépôt: 07360038.9
(22) Date de dépôt: 23.08.2007
(51) Int. Cl.: G01D 5/347

(54) **Capteur d'angle à codage multitour**
Winkelsensor mit Multiturn-Kodierung
Angle sensor with multiturn encoding

(43) Date de publication de la demande: 25.02.2009
(73) Titulaire: Delphi Technologies, Inc., Troy, MI 48098 (US)
(72) Inventeur: Geyl, Laurent c/o DMS, 67411 Illkirch (FR); Tupinier, Laurent, 67116 Reichstett (FR); Michel, Johann, 67400 Illkirch Graffenstaden (FR)
(74) Mandataire: Robert, Vincent

(56) Documents cités:
- DE-A1- 19 638 911
- DE-A1- 19 855 064
- FR-A- 2 798 193

## Description

La présente invention concerne un capteur d'angle comportant un disque rotatif solidaire d'un arbre tournant support de moyens de codage angulaires.

Une application possible, qui sert de fil conducteur à la présente description, est la colonne de direction d'un véhicule automobile. Dans une telle application, outre le codage de la position du disque sur un tour, il est nécessaire de savoir de manière absolue quelle est la position du volant sur plusieurs tours (une colonne de direction doit tourner d'environ 5 tours). Or, la plupart des capteurs angulaires actuels ne fournissent un codage absolu de la position angulaire que sur un tour, et il reste donc à coder le tour dans lequel on se situe.

Un comptage incrémental des tours n'est pas suffisant, car la position précise du volant doit être identifiée précisément même au démarrage.

Nombre de solutions utilisées actuellement sont basées sur des technologies magnétiques, par exemple des capteurs à effet Hall associés à des solutions mécaniques à engrenages. Les roues dentées sont alors excentrées par rapport à la colonne de direction, et il faut veiller à concevoir un système d'encombrement le plus réduit possible, car le volume sous volant disponible est en général peu important.

Le brevet FR 2 798 193 comporte une solution mécanique à engrenages, telle que décrite précédemment, ayant une cinématique complexe en vue de déterminer le tour sur lequel se trouve la colonne de direction.

Une solution présentée dans le brevet DE 196 38 911 concerne un capteur angulaire comprenant un disque rotatif équipé de cellules de codage placées dans une gorge en forme de spirale et lues par un dispositif de lecture. Les cellules de codage utilisées dans la piste spiralée codent à la fois le tour et la position angulaire. La spirale s'enroule ainsi sur plusieurs tours, augmentant proportionnellement le nombre de cellules nécessaires au codage de la position du volant.

Il existe également des solutions optiques basées sur la technologie des ombrages, comme par exemple les solutions divulguées dans le document DE - 198 55 064. Celles-ci décrivent des configurations dans lesquelles la source de lumière est disposée radialement d'un côté du disque rotatif, un photodétecteur étant disposé parallèlement de l'autre côté du disque. Un curseur mobile dans une direction radiale relativement au disque bloque ou filtre le passage du rayon lumineux issu de la source de lumière en vue d'effectuer le codage du tour. Un élément de blocage ou de filtration du faisceau lumineux, directement intégré au disque rotatif, permet par ailleurs le codage de la position angulaire sur un tour. Le même photodétecteur est donc utilisé pour traiter le déplacement de deux signaux lumineux codant respectivement le tour et la position angulaire.

Dans deux des trois solutions montrées, le système permettant le déplacement radial du curseur n'est pas expliqué, Dans le troisième cas, il s'agit d'un cavalier guidé en rotation par une piste en relief spiralée, et maintenu en translation radiale par un dispositif détecteur rectiligne et de très faible largeur, qui ne s'apparente pas aux configurations de photodétecteurs classiques disponibles dans le commerce. Les solutions proposées apparaissent donc théoriques.

Le capteur d'angle de la présente invention, comportant également un disque rotatif, est doté d'une surface annulaire divisée en cellules de codage de la position angulaire du disque, lesdites cellules transformant un faisceau lumineux incident en un signal optique lumineux véhiculant un code de ladite position angulaire, ledit signal étant ensuite conduit par un guide de lumière vers un photodétecteur fixe relié à des moyens de traitement dudit code.

Selon une caractéristique essentielle de l'invention, le guide de lumière est mobile en rotation selon un axe parallèle à l'axe de rotation du disque, un bras solidaire dudit guide, entraîné dans une direction d'allure radiale par le disque en rotation, déplaçant le guide de lumière relativement au photodétecteur.

En d'autres termes, le signal véhiculant le code optique correspondant à la position angulaire du disque rotatif se déplace également par rapport au photodétecteur. C'est le positionnement du signal relativement au photodétecteur qui est utilisé pour déterminer le tour dans lequel on se situe. Ainsi, à l'inverse des solutions de l'art antérieur, le photodétecteur ne détecte pas deux types de signaux lumineux correspondant au codage respectivement de la position angulaire et du tour, mais un seul signal lumineux, dont la position par rapport au détecteur évolue selon le tour.

Selon une possibilité, le disque peut comporter un sillon spiralé sur n tours, guidant un doigt équipant l'extrémité libre du bras solidaire du guide de lumière. Dans l'exemple de la colonne de direction, le sillon se développe selon une spirale d'environ 5 tours.

Compte tenu que le guide de lumière n'a qu'un degré de liberté, en rotation, le doigt guidé par le sillon spiralé se déplace sensiblement radialement par rapport au disque, et fait pivoter ledit guide de lumière.

De préférence, l'axe de rotation du guide est placé au voisinage de la bordure du disque, et contigu à l'entrée du guide de lumière.

De préférence encore, le bras est aussi solidarisé au guide de lumière au niveau de son entrée, mais du côté opposé à l'axe de rotation. Ce bras agit en fait comme un levier d'actionnement communiquant son mouvement au guide de lumière.

Celui-ci peut par exemple présenter une portion d'allure rectiligne s'orientant sensiblement tangentiellement au disque.

Plus précisément, le guide de lumière peut être constitué de deux déflecteurs de lumière respectivement d'entrée et de sortie reliés par une portion rectiligne conférant au signal lumineux un trajet en U inversé.

Le faisceau lumineux incident est transformé en signal optique véhiculant un code de la position angulaire, lequel est alors conduit vers le photodétecteur fixe, en l'espèce placé à l'extérieur du disque sensiblement au même niveau que le disque.

D'ailleurs, de préférence, le pivot de la rotation du guide de lumière et le photodétecteur sont placés sur une même platine.

L'art antérieur montre des configurations dans lesquelles les composants sont placés de part et d'autre du disque, augmentant l'encombrement du volume sous volant nécessaire à l'installation d'un capteur d'angle de colonne de direction. Dans l'invention, le pivot de la rotation du guide de lumière et le composant électronique constituant le photodétecteur sont disposés pratiquement au même niveau, permettant de réduire sensiblement l'épaisseur du module capteur d'angle.

De préférence, selon l'invention, les cellules de codage comportent des hologrammes générés par ordinateur, diffractant le faisceau lumineux constitué d'un faisceau laser en un code optique numérique.

Des cellules dotées d'hologrammes générés par ordinateur sont faciles à fabriquer par injection ou pressage sur un disque en plastique selon un procédé industriel bien maîtrisé. Lorsque le faisceau laser illumine une cellule dotée d'un hologramme généré par ordinateur, il génère une figure de diffraction unique constituée de taches illuminées ou sombres, constituant un code optique numérique. Ce code binaire indique une position angulaire précise du disque rotatif.

Selon une possibilité, le photodétecteur consiste en une rangée de cellules de photodétection. En pratique, il s'agit d'un composant électronique classique à pattes soudables sur un circuit imprimé.

Dans cette hypothèse, les hologrammes générés par ordinateur constituant les cellules de codage placées sur les disques rotatifs sont prévus de telle sorte que le signal diffracté constitue un code binaire formé de taches lumineuses ou sombres qui sont alignées. Le guide de lumière conduit alors la rangée de taches constituant ce code vers le photodétecteur de telle sorte que l'axe des cellules de photodétection et celui de la rangée de taches soit sensiblement parallèles.

Les moyens de traitement, selon l'invention, effectuent alors un codage du tour par détermination du positionnement du code optique véhiculé par le signal optique relativement au photodétecteur.

En d'autres termes, le codage du tour dépend de la position des cellules excitées à l'intérieur de la rangée de cellules constituant le photodétecteur.

Il faut alors prévoir un photodétecteur constitué d'un nombre suffisant de cellules de photodétection pour permettre la lecture du déplacement des codes numériques obtenus par diffraction le long de la rangée des cellules de photodétection, et adapter le déplacement du système mécanique - en l'occurrence le guide de lumière rotatif - à la longueur du photodétecteur.

L'invention va être à présent décrite plus en détail, en référence aux figures, pour lesquelles :
- la figure 1 montre, en vue perspective partielle, la configuration adoptée pour le capteur d'angle de l'invention ; et
- les figures 2a à 2c représentent schématiquement le fonctionnement du dispositif, en montrant le déplacement du code optique numérique par rapport au photodétecteur en fonction du tour parcouru par le capteur d'angle.

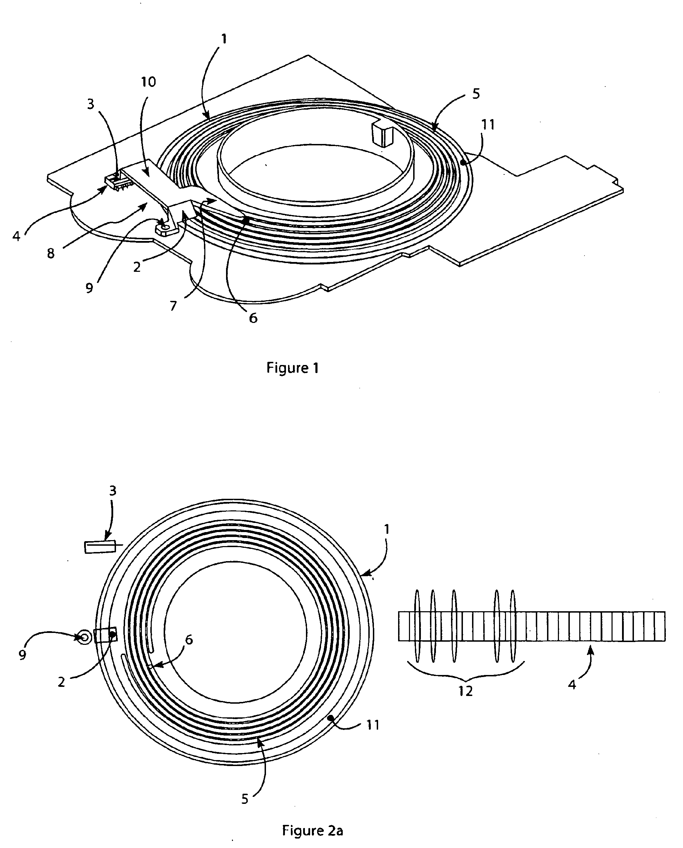

En référence à la figure 1, un disque rotatif (1), solidarisé dans l'exemple d'application utilisé à une colonne de direction (non représentée), comporte sur sa surface supérieure des sillons spiralés (5) guidant un doigt (6) disposé à l'extrémité d'un bras (7) solidaire d'un guide de lumière (8) libre en rotation autour d'un pivot (9). Ce guide de lumière (8) est constitué de prismes (2, 3) respectivement d'entrée (2) et de sortie (3) reliés par une portion d'allure rectiligne (10). Une surface annulaire périphérique (11) du disque rotatif (1) est dotée de cellules de codage de la position angulaire du disque.

Ces cellules, comportant en l'espèce des hologrammes générés par ordinateur, diffractent un rayon laser incident. Le signal lumineux diffracté est ensuite conduit, par le guide de lumière (8), vers un composant photodétecteur (4) comportant des cellules de photodétection alignées en une rangée. Le signal diffracté, composé de taches illuminées et sombres, est véhiculé par le guide de lumière (8) vers le photodétecteur (4). Les hologrammes sont calculés de telle sorte que le signal diffracté comporte des taches en lignes, générées dans une direction sensiblement radiale par rapport au disque rotatif (1), de telle sorte que la rangée de taches (12) restituée par le prisme de sortie (3) du guide de lumière (8) est d'allure parallèle à la rangée des cellules de photodétection du composant (4).

Lorsque la colonne de direction tourne, entraînant le disque rotatif (1), le doigt (6) se déplace dans une direction sensiblement radiale, faisant pivoter par l'intermédiaire du bras (7) le guide de lumière (8) autour du pivot (9). C'est ce qui apparaît dans les figures 2a à 2c. Ainsi, en référence à la figure 2a, le doigt (6) se trouve dans le premier tour de rotation, le prisme de sortie (3) du photodétecteur est positionné vers l'une des extrémités du composant photodétecteur (4), et le code lumineux numérique (12) obtenu après diffraction est guidé vers l'une des extrémités de la ligne de cellules de photodétection.

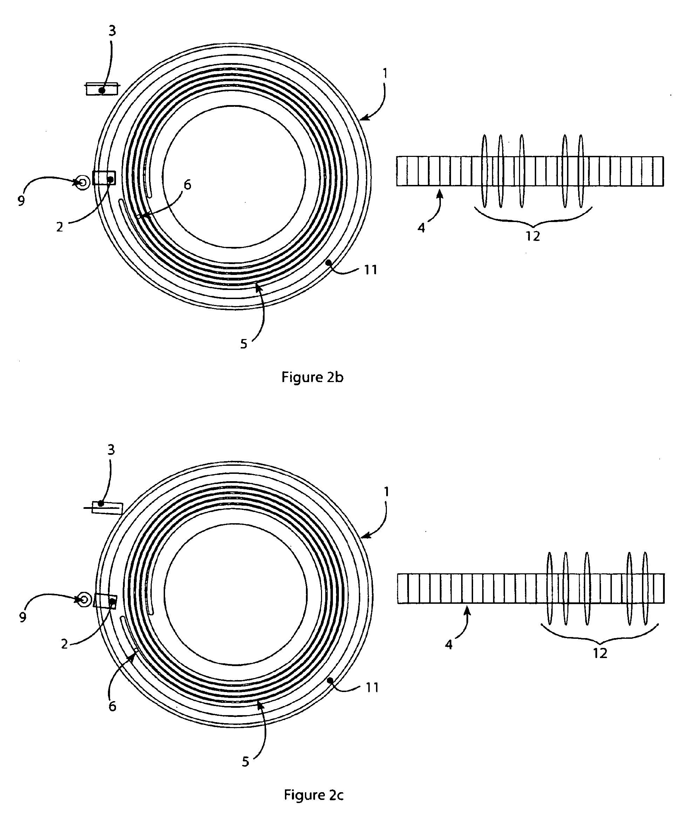

En figure 2b, le doigt (6) se trouve à peu près au milieu, c'est-à-dire dans le troisième tour puisqu'on considère qu'une colonne de direction doit effectuer environ 5 tours. Dans ce cas, la lumière diffractée véhiculant le code binaire codant la position angulaire du disque (1) se trouve sensiblement au milieu du photodétecteur (4).

Enfin, en figure 2c, on se trouve dans le tour (5), et le code binaire (12) est alors déporté vers l'autre extrémité de la ligne de cellules de photodétection.

Le codage du tour se fait donc simplement par reconnaissance par le système de traitement de la zone dans laquelle se situe le code diffractif. Un calibrage préliminaire permet de savoir exactement, en fonction des cellules de photodétection illuminées, dans quel tour on se trouve. Il est alors possible de coder simplement, outre la position angulaire par le code diffractif obtenu, le tour par la position de ce code sur la ligne de cellules de photodétection.

## Revendications

1. Capteur d'angle comportant un disque rotatif (1) doté d'une surface annulaire (11) divisée en cellules de codage de la position angulaire du disque (1), lesdites cellules transformant un faisceau lumineux incident en un signal optique lumineux véhiculant un code de ladite position angulaire, ledit signal étant conduit par un guide de lumière (8) vers un photodétecteur (4) fixe relié à des moyens de traitement dudit code,
**caractérisé en ce que** le guide de lumière (8) est mobile en rotation selon un axe parallèle à l'axe de rotation du disque (1), un bras (7) solidaire dudit guide (8), entraîné dans une direction d'allure radiale par le disque (1) en rotation, déplaçant le guide de lumière (8) relativement au photodétecteur (4).

2. Capteur d'angle selon la revendication précédente, **caractérisé en ce que** le disque (1) comporte un sillon spiralé (5) sur n tours, guidant un doigt (6) équipant l'extrémité libre du bras (7) solidaire du guide de lumière (8).

3. Capteur d'angle selon l'une des revendications précédentes,
**caractérisé en ce que** l'axe de rotation du guide de lumière (8) est placé au voisinage de la bordure du disque (1), et contigu à l'entrée du guide de lumière (8).

4. Capteur d'angle selon la revendication précédente, **caractérisé en ce que** le bras (7) est solidarisé au guide de lumière (8) au niveau de son entrée, du côté opposé à l'axe de rotation.

5. Capteur d'angle selon l'une quelconque des revendications précédentes, **caractérisé en ce que** le guide de lumière (8) présente une portion (10) d'allure rectiligne s'orientant sensiblement tangentiellement au disque (1).

6. Capteur d'angle selon l'une quelconque des revendications précédentes, **caractérisé en ce que** le guide de lumière (8) est constitué de deux déflecteurs (2, 3) de lumière respectivement d'entrée (2) et de sortie (3) reliés par une portion rectiligne (10) conférant au signal lumineux un trajet en U inversé.

7. Capteur d'angle selon l'une quelconque des revendications précédentes, **caractérisé en ce que** le pivot (9) de la rotation du guide de lumière (8) et le photodétecteur (4) sont placés sur une même platine.

8. Capteur d'angle selon l'une quelconque des revendications précédentes, **caractérisé en ce que** les cellules de codage comportent des hologrammes générés par ordinateur, diffractant le faisceau lumineux constitué d'un faisceau laser en un code optique numérique.

9. Capteur d'angle selon l'une quelconque des revendications précédentes, **caractérisé en ce que** le photodétecteur (4) consiste en une rangée de cellules de photodétection.

10. Capteur d'angle selon l'une des revendications précédentes,
**caractérisé en ce que** les moyens de traitement effectuent un codage du tour par détermination du code optique véhiculé par le signal optique relativement au photodétecteur (4).

11. Capteur d'angle selon les revendications 9 et 10, **caractérisé en ce que** le codage du tour dépend de la position des cellules excitées à l'intérieur de la rangée de cellules constituant le photodétecteur (4).

## Claims

1. Angle sensor including a rotary disc (1) having an annular surface (11) divided into cells for encoding the angular position of the disc (1), the said cells transforming an incident light beam into an optical light signal conveying a code of the said angular position, the said signal being conducted by a light guide (8) to a fixed photodetector (4) connected to means for processing the said code,
**characterised by** the fact that the light guide (8) is movable in rotation about an axis parallel with the axis of rotation of the disc (1), an arm (7) attached to the said light guide (8) driven in a radial direction by the rotating disc (1), displacing the light guide (8) relatively to the photodetector (4).

2. Angle sensor as described in the preceding claim, **characterised by** the fact that the disc (1) includes a spiral groove (5) about n turns, guiding a finger (6) fitted to the free end of the arm (7) attached to the light guide (8).

3. Angle sensor as described in one of the preceding claims, **characterised by** the fact that the axis of rotation of the light guide (8) is placed in the vicinity of the edge of the disc (1) and contiguous with the input of the light guide (8).

4. Angle sensor as described in the preceding claim, **characterised by** the fact that the arm (7) is attached to the light guide (8) at the level of its input, on the opposite side to the axis of rotation.

5. Angle sensor as described in any one of the preceding claims, **characterised by** the fact that the light guide (8) presents a rectilinear portion (10) orientated substantially tangentially to the disc (1).

6. Angle sensor as described in any one of the preceding claims, **characterised by** the fact that the light guide (8) is formed of two input (2) and output (3) respectively light deflectors (2, 3) joined by a rectilinear portion (10) giving the light signal a path in the form of an inverted U.

7. Angle sensor as described in any one of the preceding claims, **characterised by** the fact that the pivot (9) of the rotation of the light guide (8) and the photodetector (4) are placed on a same plate.

8. Angle sensor as described in any one of the preceding claims, **characterised by** the fact that the encoding cells include computer-generated holograms, diffracting the light beam formed of a laser beam into a digital optical code.

9. Angle sensor as described in any one of the preceding claims, **characterised by** the fact that the photodetector (4) consists of a row of photodetection cells.

10. Angle sensor as described in one of the preceding claims, **characterised by** the fact that the processing means perform encoding of the turn by determination of the optical code conveyed by the optical signal relatively to the photodetector (4).

11. Angle sensor as described in claims 9 and 10, **characterised by** the fact that the encoding of the turn depends on the position of the excited cells within the row of cells forming the photodetector (4).

## Patentansprüche

1. Winkelsensor, umfassend eine rotierende Scheibe (1), die mit einer ringförmigen Fläche (11) versehen ist, die in Zellen zur Codierung der Winkelstellung der Scheibe (1) geteilt ist, wobei die Zellen einen einfallenden Lichtstrahl in ein optisches Lichtsignal umwandeln, das einen Code der Winkelstellung befördert, wobei dieses Signal durch einen Lichtleiter (8) zu einem feststehenden Fotodetektor (4) geleitet wird, der mit Mitteln zur Verarbeitung des Codes verbunden ist,
**dadurch gekennzeichnet, dass** der Lichtleiter (8) um eine zur Drehachse der Scheibe (1) parallele Achse drehbeweglich ist, wobei ein mit dem Leiter (8) fest verbundener Arm (7), der durch die rotierende Scheibe (1) in einer radial verlaufenden Richtung mitgenommen wird, den Lichtleiter (8) bezüglich des Fotodetektors (4) bewegt.

2. Winkelsensor nach dem vorhergehenden Anspruch, **dadurch gekennzeichnet, dass** die Scheibe (1) eine Rille (5) mit spiralförmigem Verlauf über n Umdrehungen umfasst, die einen Finger (6) führt, mit dem das freie Ende des mit dem Lichtleiter (8) fest verbundenen Arms (7) versehen ist.

3. Winkelsensor nach einem der vorhergehenden Ansprüche, **dadurch gekennzeichnet, dass** die Drehachse des Lichtleiters (8) in Nähe der Rands der Scheibe (1) angeordnet ist und an den Eintritt des Lichtleiters (8) angrenzt.

4. Winkelsensor nach dem vorhergehenden Anspruch, **dadurch gekennzeichnet, dass** der Arm (7) mit dem Lichtleiter (8) auf Höhe seines Eintritts auf der der Drehachse entgegengesetzten Seite fest verbunden ist.

5. Winkelsensor nach einem der vorhergehenden Ansprüche, **dadurch gekennzeichnet, dass** der Lichtleiter (8) einen geradlinig verlaufenden Abschnitt (10) aufweist, der im Wesentlichen tangential zur Scheibe (1) gerichtet ist.

6. Winkelsensor nach einem der vorhergehenden Ansprüche, **dadurch gekennzeichnet, dass** der Lichtleiter (8) aus zwei Lichtdeflektoren (2, 3), einem Eintrittsdeflektor (2) bzw. einem Austrittsdeflektor (3) besteht, die durch einen geradlinigen Abschnitt (10) verbunden sind und dem Signal einen Weg in Form eines umgekehrten U's verleihen.

7. Winkelsensor nach einem der vorhergehenden Ansprüche, **dadurch gekennzeichnet, dass** die Drehachse (9) der Drehung des Lichtleiters (8) und der Fotodetektor (4) auf einer gemeinsamen Platine angeordnet sind.

8. Winkelsensor nach einem der vorhergehenden Ansprüche, **dadurch gekennzeichnet, dass** die Codierungszellen rechnergenerierte Hologramme umfassen, die den aus einem Laserstrahl bestehenden Lichtstrahl in einem digitalen optischen Code beugen.

9. Winkelsensor nach einem der vorhergehenden Ansprüche, **dadurch gekennzeichnet, dass** der Fotodetektor (4) aus einer Reihe von Fotodetektorzellen besteht.

10. Winkelsensor nach einem der vorhergehenden Ansprüche, **dadurch gekennzeichnet, dass** die Verarbeitungsmittel eine Codierung der Umdrehung durch Bestimmung des durch das optische Signal beförderten optischen Codes bezüglich des Fotodetektors (4) vornehmen.

11. Winkelsensor nach den Ansprüchen 9 und 10, **dadurch gekennzeichnet**, die Codierung der Umdrehung von der Stellung der angeregten Zellen im Inneren der den Fotodetektor (4) bildenden Zellenreihe abhängt.
